# EUROPEAN PATENT APPLICATION

(11) **EP 1 467 447 A1**
(43) Date of publication of application: **13.10.2004**
(21) Application number: 03396032.9
(22) Date of filing: 10.04.2003
(51) Int. Cl.: H01R 31/06, H01R 25/16

(54) **Electric connection for electrical duct box**

(71) Applicant: Lexel Electric Oy, 07970 Ruotsinpyhtää (FI)
(72) Inventor: Seger, Leif, 07900 Loviisa (FI)
(74) Representative: Tanhua, Pekka Vilhelm

(57) **Abstract**

The invention relates to an electric connection for an electrical duct box (1), said connection being designed for a fixed plug connector (4) of a ready-made cable (3) in order to supply power into the electrical duct box (1). According to the invention, the electric connection (2) comprises an adapter unit (5) including two electric connectors (6, 7), said adapter unit being detachably connectable from the first electric connector (6) to the electric connector (8) of the electrical duct box (1), which connector (8) is located at the end (1a) of the electrical duct box, and from the second electric connector (7) to the plug connector (4) of the ready-made cable.

## Description

The invention relates to an electric connection for an electrical duct box according to the preamble of claim 1.

An electrical duct box is meant to be installed in an electrical duct. The term electrical duct here means various elongate installation spaces that can be mounted on a wall and that are at least partly covered by shielding covers, usually made of U-shaped basic profile and designed in various shapes. Along these installation spaces, there can be drawn various cables and wires, such as electric and/or data transmission cables, and various electric appliances and the like can be installed in said spaces. As for the electrical duct box, in this connection it means in general an electric appliance that can be installed in an electrical duct, including for instance power sockets, switches, meters, tele, telephone and data transmission connectors/elements and other similar elements.

In the prior art there is known, from the Finnish patent publication FI-88447, an electrical duct box that can be installed in an electrical duct without a separate shielding box. Said electrical duct box includes a connector element, through which the supply voltage required by the electrical box is fed in the box. The connector element can be connected to the mains by an input cable. The connector element is either a separate element to be connected to the electrical duct box, or a unit formed by the electrical duct box and the connector element.

In the prior art there is known an electrical installation system where the cable sections between the electric supply points and the electric plant and/or between the various supply points are formed of industrially manufactured wiring series that are cut in predetermined lengths and provided with fixed plug connectors. The use of said wiring series requires that the supply points are provided with counterconnectors that match in the plug connectors. Consequently, it is not possible to use such supply points, i.e. power sockets, terminal boxes, switches etc. that are not provided with counterconnectors for the wiring series.

It is naturally an advantage of the above described installation system that the electrical installation works are remarkably simplified, which saves particularly the working time used in installation.

A drawback with an electrical duct box is that the input cable (and respectively the output cable) must be separately and manually installed in the connector unit. Therefore industrially manufactured wiring series cannot be used in connection with the current electrical duct boxes. The connector unit of an electrical duct box is only meant for connecting the normal input cable (and respectively the output cable) by an electric engineer to the electrical duct box.

The object of the invention is to eliminate the drawbacks occurring in the electric connection of the electrical duct box described above. Another object of the invention is to realize a new electric connection for an electrical duct box, said connection being particularly suitable in an electrical installation system utilizing ready-made wiring series.

The electric connection for electrical duct box according to the invention is characterized by what is set forth in claim 1. The dependent claims describe preferred embodiments of the invention.

The electric connection for an electrical duct box according to the invention is designed for a fixed plug connector of ready-made cables, for supplying power into the electrical duct box. According to the invention, the electric connection comprises an adapter unit including two electric connectors, said adapter unit being detachably connectable from the first electric connector to the electric connector of the electrical duct box, said first connector of the electrical duct box being located at the end of said electrical duct box, and from the second electric connector to the plug connector of the ready-made cable.

An advantage of the invention is that the electrical duct box can be used both in normal electrical installation and in electrical installation realized by means of industrially manufactured cables. Another advantage of the invention is that the adapter unit included in the electric connection can be easily and rapidly installed in connection with the electrical duct box, most advantageously without any tools.

In a preferred embodiment of the invention, the first electric connector of the adapter unit is a female contact and the electric connector of the electrical duct box is a male contact, said contacts being connectable to each other. An advantage of said arrangement is that power can be directly fed even to such an electrical duct box that earlier could not be used as an independent electrical duct box. Another advantage is that the electrical duct box is still electrically protected against contact, even if power is fed therein, because the second female contact of the electrical duct box is always protected against contact.

A remarkable advantage of the invention is that owing to the electric connection according to the invention, the possibilities for using an electrical duct box become clearly more versatile than before. The electrical duct box can be used both in normal electrical installation and in an electrical installation system utilizing ready-made cables. Earlier it was necessary to couple a connector unit to the electrical duct box before power could be fed therein, or alternatively the power supply had to be arranged through another electrical duct box that was connected in parallel.

The invention is described in more detail below with reference the appended drawings, where
figure 1 is a schematical illustration of an electrical duct box in partial cross-section, seen from the side of the front cover and installed in an electrical duct;
figure 2 shows a cross-section B - B of the electrical duct box illustrated in figure 1, seen from the end of the electrical duct box;
figure 3 is a schematical illustration of an electric cable provided with fixed plug connectors at both ends;
figure 4A is a side-view illustration of an adapter unit included in the electric connection according to the invention;
figure 4B is a front-view illustration of an adapter unit included in the electric connection according to the invention, seen from the side of the first electric connector;
figure 4C is a top-view illustration of an adapter unit included in the electric connection according to the invention;
figure 4D is a front-view illustration of an adapter unit included in the electric connection according to the invention, seen from the side of the second electric connector;
figure 5 is a side-view illustration of how the adapter unit is connected to the electrical duct box; and
figure 6 illustrates the electric connection according to the invention between a ready-made cable and an electrical duct box.

Like numbers for like parts are used in the drawings.

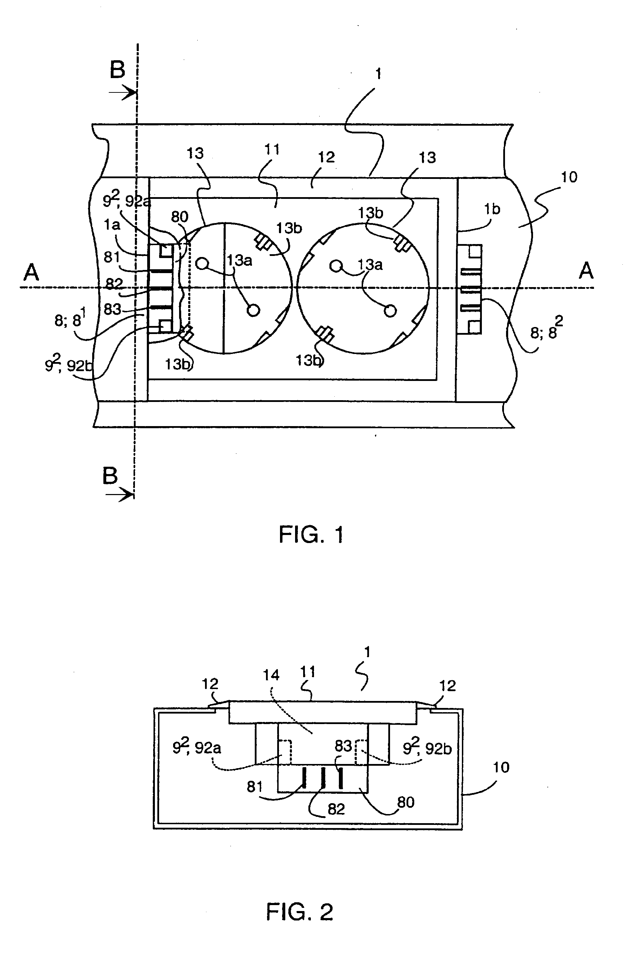

An electrical duct box 1 is illustrated in figures 1 and 2 as arranged in an electrical duct 10. In cross-section, the electrical duct 10 is a rectangular trough open at the front surface, in which one or several electrical duct boxes 1 can be attached most advantageously by means of a fast coupling or snap-on joint without tools. The electrical duct 10 can be covered by shielding covers (not illustrated in figures 1 or 2) on both sides of the electrical duct box 1. In the lengthwise direction A - A, on the other side of the electrical duct box 1, there can also be directly connected an auxiliary electrical duct box that advantageously has a similar structure as the electrical duct box 1 in question. Most advantageously also the shielding cover can be attached to the front surface of the electrical duct box by a snap-on joint. Electric cables and other wires, such as telephone and data transmission cables, are arranged to proceed in the electrical duct 10. The power sockets and other electric appliance and device connections proper, and even a part of such appliances and devices themselves can be arranged in the electrical duct box.

In the embodiment illustrated in the drawings, the electrical duct box 1 is a duct power socket. The electrical duct box 1 comprises a front cover 11 and a cover frame 12 that at least partially surrounds the front cover 11. The electrical duct box includes a number of power sockets 13 arranged in the front cover 11. The power sockets 13, two in the described embodiment, are arranged in succession with respect to the lengthwise direction A - A of the electrical duct box and likewise in the lengthwise direction of the electrical duct 10. Each power socket 13 includes, in known fashion, two recesses 13a for the contact pins of the plug to be connected therein, and in the illustrated embodiment also two earth terminals 13b. The electric contact elements proper of the power socket for zero potential and phase potential are arranged in the recesses. Respectively the earth terminals are connected to protective earth. Now the duct power socket in question is an earthed one-phase socket.

At both ends 1a, 1b of the electrical duct box 1, there are arranged electric connectors 8; 8¹, 8². In structure, the first electric connector 8; 8¹ is a male electric contact. In turn, the second electric connector 8; 8² is a female electric contact. The electric connectors 8; 8¹, 8² are arranged below the level of the surface formed by the front cover 11 of the electrical duct box 1, i.e. on the side of the electrical duct 10. The first electric connector 8; 8¹ is bordered by the vertical plane of the respective electrical duct box end 1a, whereas the second electric connector extends to outside the respective end 1b, in the lengthwise direction A - A of the electrical duct box, for the length of the connector housing. Now an auxiliary electrical duct box corresponding to the electrical duct box proper can be respectively connected from the male contact to the female contact 8; 8² of the electrical duct box 1, and so that the electrical duct boxes are compactly set against each other at the ends. At both ends 1a, 1b of the electrical duct box 1, there are also provided mechanical fastening means (not illustrated in the drawings) for detachably fastening them together.

In structure the first electric connector 8; 8¹ of the electrical duct box - which is below called, for the sake of simplicity, only the electric connector of the electrical duct box - is advantageously as follows. The electric connector 8; 8¹ comprises a housing 80 provided with suitably arranged male contact terminals 81, 82, 83, as is apparent for example from figure 2. Advantageously there are three male contact terminals 81, 82, 83, i.e. a phase/voltage terminal 81, a zero terminal 82 and a protective ground or earth terminal 83. Each male contact terminal 81, 82, 83 is made of an electroconductive connector tongue or a corresponding bracket protruding outwardly from the housing 80 in the lengthwise direction A - A. The male contact terminals 81, 82, 83 are further connected to the contact elements of the power sockets 13 by means of wires arranged in the wire housing 14.

The duct power socket 1 is realized so that it is electrically protected against contact on all sides except for the first or male contact 8; 8¹, and thus on the side of the contacts receiving power, wherefore it can be installed in the electrical duct 10 without a separate protective box.

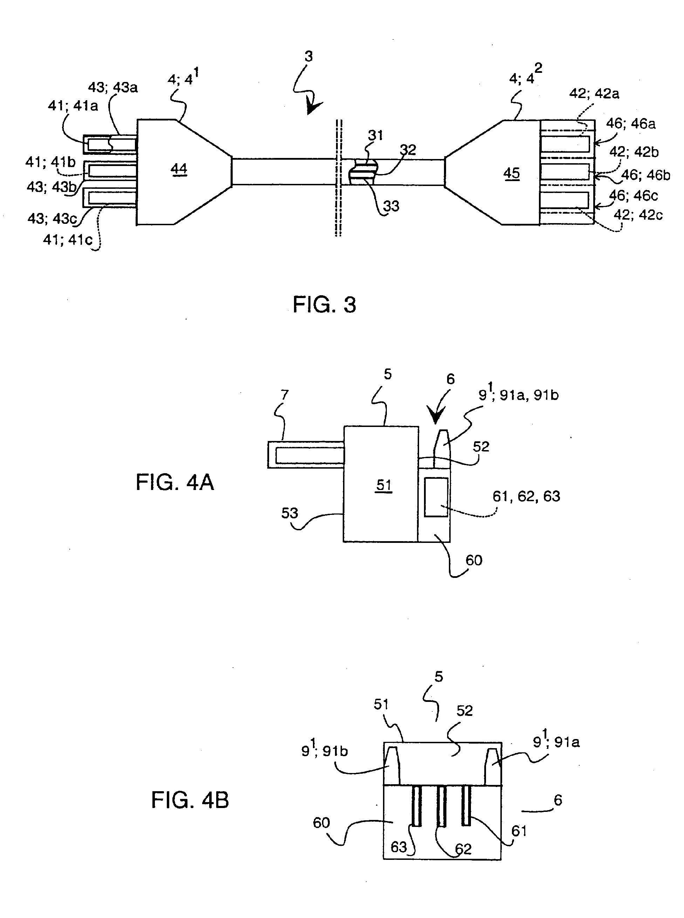

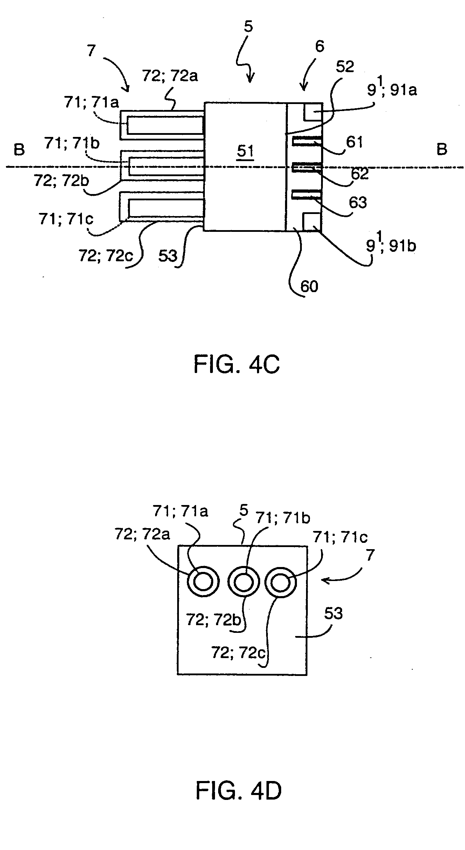

A ready-made electric cable 3 with a predetermined length is schematically illustrated in figure 4. At both ends of the cable 3, there is provided a fixed electric plug connector 4; 4¹, 4². The electric cable 3 is part of a wiring series including electric cables with predetermined but varying lengths, measured in a way defined in advance. The first plug connector 4¹ is a male contact comprising first contact terminals 41; 41a, 41b and 41c. The second plug connector 4² is a female contact comprising second contact terminals 42; 42a, 42b and 42c. The cable 3 includes three wires 31, 32, 33, the first 31 of which is connected between the contact terminals 41a and 42a, the second wire 32 is connected between the contact terminals 41b and 42b and the third wire 33 is connected between the contact terminals 41c and 42c. The first contact terminals 41; 41a, 41b of the fist plug connector 4¹ 41c are arranged inside insulating sleeves 43; 43a, 43b, 43c, said insulating sleeves 43 being attached to the housing 44 of the first plug connector. The second plug connector 4², i.e. the female contact, comprises a housing 45 provided with recesses 46; 46a, 46b, 46c, in which the second contact terminals 42a, 42b and 42c are fitted. The contact terminals 4; 4¹, 4² of the cable are mutually matching.

The cable 3 illustrated in figure 4 is designed for a one-phase alternating current system. To the first contact terminals 41a, 42a of the plug connectors 4¹, 4² there is connected phase potential. Respectively, to the second contact terminals 41b and 42b, there is connected zero potential. In similar fashion, the third contact terminals 41c, 42c are connected to protective ground.

The cables 3 are made into a wiring series in industrial production, so that the cables 3 are cut at predetermined lengths, and that the plug connectors 4; 4¹, 4² of the cable 3 are made into essentially fixed elements of the cable 3. This kind of cable 3 is at least here called a ready-made cable. It is pointed out that the above described cable structure with fixed plug connectors only is an illustrative example of an industrially manufactured cable in a wiring series, and obviously it can be realized in many different ways.

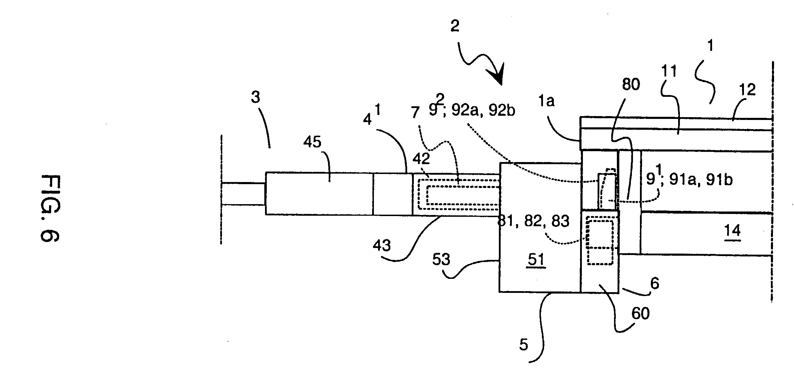

The electric connection 2 of an electrical duct box 1 according to the invention, figure 6, is meant for the plug connector 4; 4¹ of the ready-made cable 3 for feeding power into the electrical duct box 1. For this purpose, the electric connection 2 comprises an adapter unit 5, figures 4A, 4B, 4C and 4D. The adapter unit 5 includes two electric connectors 6, 7. From the first electric connector 6, the adapter unit 5 is detachably connectable to the electric connector 8; 8¹ of the electrical duct box, located at the end 1a of the electrical duct box, and from the second electric connector 7 to the plug connector 4; 4¹ of the ready-made cable 3. Consequently, the first electric connector 6 of the adapter unit 5 is made to match with one electric connector 8; 8¹ of the electrical duct box 1, and respectively the second electric connector 7 of the adapter unit 5 is made to match with one plug connector 4; 4¹ of the ready-made cable 3.

The adapter unit 5 comprises a housing 51 with opposite ends 52, 53 in the lengthwise direction B - B thereof. The electric connectors 6, 7 of the adapter unit 5 are arranged at said ends 52, 53. Advantageously the adapter unit 5 is a simple geometric object, such as a regular straight prism, in cross-section rectangular or the like. The ends 52, 53 are preferably parallel and perpendicular to the lengthwise direction B - B.

Hence the first electric connector 6 of the adapter unit 5 matches with the electric connector 8; 8¹ of the electrical duct box 1. Most advantageously the electric connector 8 of the electrical duct box is a male contact 8¹, the structure whereof already was explained above.

The first electric connector 6 of the adapter unit 5 comprises the connector housing 60 and female contact terminals 61, 62, 63 suitably arranged therein. The number of the female contact terminals is three: one for phase potential 61, one for zero potential 62 and one for protective ground 63. Each contact terminal 61, 62, 63 is formed of an electrically insulated and contact-shielded connector slot, in which the electroconductive connector element proper is inserted. The connector slot is arranged to open both forwardly and upwardly from the connector housing 60. In length, the connector slot corresponds to the length of the contact terminals 81, 82, 83 of the first electric connector 8; 8 of the electrical duct box 1, i.e. the length of the contact terminals of the male contact.

In addition, in connection with the first electric connector 6 of the adapter unit 5 and the electric connector 8; 8¹ of the end 1a of the electrical duct box 1, there are provided mechanical fastening elements 9; 9¹, 9² for fastening the adapter unit 5 detachably in the electrical duct box 1. Most advantageously the mechanical fastening elements 9; 9¹, 9² comprise elements for realizing a snap-on joint.

The mechanical fastening elements 9 include mutually matching first and second fastening element parts 9¹, 9². In the described embodiment, the first fastening element parts 9¹ include a pair of pins 91a, 91b, and the second fastening element parts 9² include a pair of recesses 92a, 92b. They are arranged in a mutually matching fashion on both sides of the first electric connector 6 of the adapter unit 5, and respectively on both sides of the electric connector 8; 8¹ of the electrical duct box. In this case, on the sides of the female contact terminals 61, 62, 63 of the first electric connector part 6 of the adapter unit 5 there are arranged pins 91a, 91b that are directed upwardly and also at right angles to the lengthwise direction B - B, said pins being attached to the connector housing 60. Respectively, on the sides of the male contact terminals 81, 82, 83 of the electric connector 8; 8¹ of the electrical duct box 1, there are arranged recesses 92a, 92b, said recesses being directed downwardly, at right angles to the outwardly protruding direction of the male contact terminals, and likewise at right angles to the lengthwise direction A - A of the electrical duct box.

Naturally the pairs of pins 91a, 91b and recesses 92a, 92b of the fastening element parts 9 can also be arranged in an opposite order than in the above description, i.e. the pair of pins in connection with the electric connector 8; 8¹ of the electrical duct box and the pair of recesses in connection with the first electric connector part 6 of the adapter unit 5.

The pins 91a, 91b belonging to the first fastening element parts 9¹ are advantageously conical and narrowing towards their free ends. Respectively, the recesses 92a, 92b belonging to the second fastening element parts 9² are inwardly narrowing with a conical shape.

In connection with the mechanical fastening elements 9; 9¹, 9² there can also be arranged mutually locking tongues or similar protuberances as well as corresponding recesses in order to realize a snap-on joint.

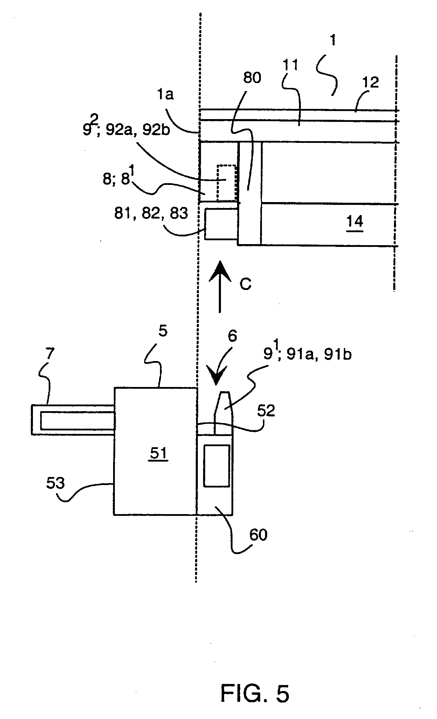

The adapter unit 5 and the electrical duct box 1 are mutually connected by placing both in succession in the lengthwise directions A - A, B - B, so that the respective electric connectors 6, 8; 8¹ and mechanical fastening elements 9¹, 9² are aligned on top of each other, whereafter they are advantageously pressed manually against each other in the vertical direction C, figure 5. Now the first electric connector 6 of the adapter unit 5 is connected to the male electric connector 8; 8¹ of the electrical duct box from below, from the direction of the arrow C, and the fastening motion takes place in the direction of the mechanical fastening elements 9; 9¹, 9² and against them, so that the respective contact terminals 81, 82, 83 and 61, 62, 63 in both electric connectors are set in mutual contact. The mutually connected adapter unit 5 and the electrical duct box 1 can be detached of their electric connectors 6, 8; 8¹ and mechanical fastening elements 9; 9¹, 9² by using a suitable tool, for instance a screwdriver, by turning it in the opposite direction, i.e. against the direction of the arrow C.

The second electric connector 7 of the adapter unit 5 fits in the fixed plug connector 4; 4¹ of the ready-made cable 3. Advantageously the second electric connector 7 of the adapter unit 5 fits in the female plug connector 4; 4¹ of the ready-made cable 3. In that case the structure of the second electric connector 7 of the adapter unit 5 is similar as the second fixed plug connector 4; 4² of the ready-made cable 3.

Now the second electric connector 7 of the adapter unit 5 comprises three contact terminals 71a, 71b, 71c that are fitted in insulation sleeves 72; 72a, 72b, 72c. The insulation sleeves 72; 72a, 72b, 72c together with their contact terminals 71a, 71b, 71c are in turn connected to the other end 53 of the housing 51 of the adapter unit 5, in the lengthwise direction B - B of the adapter unit 5. The first and second electric connectors 6, 7 of the adapter unit 5 are mutually connected by suitable wires at respective contact terminals 61a, 71a; 61b, 71b; 61c, 71c in order to realize an electric connection between the respective terminals of the electric connectors in question.

Naturally the first and second electric connectors 6, 7 of the adapter unit 5, which in the embodiment described above are a female and a male contact respectively, can be realized in many different ways. In the specification above, there is presented a preferred embodiment for both electric connectors 6, 7 of the adapter unit 5. Their structure naturally depends on the structures of the corresponding connector element 8; 8¹ of the electrical duct box and of the corresponding plug connector 4; 4¹ of the ready-made cable 3. In general, the female contacts in each terminal include an electrically insulated and thus protected recess, provided with the electroconductive connector element proper. Respectively, the male contacts include in each terminal an electroconductive, protruding, pin-like connector element, which may be separately protected by an insulating sleeve (cf. the second plug connector 4; 4²), which can be fitted in the corresponding female contact terminal.

The invention is not restricted to the above described embodiment only, but many modifications are possible within the scope of the inventive idea defined in the appended claims.

## Claims

1. An electric connection for an electrical duct box (1), said connection being designed for a fixed plug connector (4) of a ready-made cable (3) in order to supply power into the electrical duct box (1), **characterized in that** the electric connection (2) comprises an adapter unit (5) including two electric connectors (6, 7), said adapter unit being detachably connectable from the first electric connector (6) to the electric connector (8) of the electrical duct box (1), which connector (8) is located at the end (1a) of the electrical duct box, and from the second electric connector (7) to the plug connector (4) of the ready-made cable.

2. An electric connection for an electrical duct box according to claim 1, **characterized in that** the first electric connector (6) of the adapter unit (5) is a female connector, and that the electric connector (8) of the electrical duct box is a male connector (8¹), said electric connectors being mutually connectable.

3. An electric connection for an electrical duct box according to claim 1 or 2, **characterized in that** the electric connectors (6, 7) of the adapter unit (5) are arranged at opposite ends (52, 53) of the housing (51).

4. An electric connection for an electrical duct box according to any of the preceding claims, **characterized in that** in connection with the first electric connector (6) of the adapter unit and the electric connector (8; 8¹) of the electrical duct box, there are provided mechanical fastening elements (9; 9¹, 9²) in order to fasten the adapter unit (5) mechanically to the electrical duct box (1).

5. An electric connection for an electrical duct box according to claim 4, **characterized in that** the mechanical fastening elements (9; 9¹, 9²) include elements for realizing a snap-on joint.

6. An electric connection for an electrical duct box according to claim 5, **characterized in that** the mechanical fastening elements (9; 9¹, 9²) include mutually matching first and second pairs of pins and recesses (91a, 91b; 92a, 92b), said pairs being respectively arranged on both sides of the electric connectors (6, 8; 8¹).
